# EUROPEAN PATENT SPECIFICATION

(11) **EP 1 680 220 B1**
(45) Date of publication and mention of the grant of the patent: **15.02.2017**
(21) Application number: 03818800.9
(22) Date of filing: 05.12.2003
(51) Int. Cl.: B01J 23/22

(54) **VANADIUM/TITANIA-BASED CATALYST FOR REMOVING NITROGEN OXIDE AT LOW TEMPERATURE WINDOW, AND PROCESS OF REMOVING NITROGEN OXIDE USING THE SAME**
KATALYSATOR AUF VANADIUM/TITANOXID-BASIS ZUR ENTFERNUNG VON STICKOXID BEI NIEDRIGER TEMPERATUR UND VERFAHREN ZUR ABTRENNUNG VON STICKOXID DAMIT
CATALYSEUR A BASE DE VANADIUM/TITANE PERMETTANT D'ELIMINER DE L'OXYDE D'AZOTE A BASSE TEMPERATURE, ET PROCEDE D'ELIMINATION D'OXYDE D'AZOTE A L'AIDE DE CELUI-CI

(30) Priority: 27.09.2003 KR 2003067200
(43) Date of publication of application: 19.07.2006
(73) Proprietor: Korea Power Engineering Company, Inc., 449-713 Yongin-si, Gyeonggi-do (KR)
(72) Inventor: HONG, Sung-Ho, 137-773 Seoul (KR); HONG, Seok-Joo, 463-751 Seongnam-si, Gyeonggi-do (KR); HONG, Sung-Chang, 135-946 Seoul (KR); PARK, Tae-Sung, 132-782 Seoul (KR); LEE, Jun-Yub, 207-801 Ggum Maeul Woosung Apt., 431-070 Anyang-si, Gyeonggi-do (KR); CHO, Sung-Pill, 429-717 Siheung-si, Gyeonggi-do (KR)
(74) Representative: Herzog, Fiesser & Partner Patentanwälte PartG mbB
(86) International application number: PCT/KR2003/002665
(87) International publication number: WO 2005/030389

(56) References cited:
- EP-A1- 0 314 392
- US-A- 4 221 768
- US-A- 4 929 586
- US-A- 5 045 516
- US-A- 5 087 600
- US-A- 5 330 953
- US-A- 5 723 404
- US-A- 6 054 408
- S. MATSUDA ET AL.: "TITANIUM OXIDE BASED CATALYSTS- A REVIEW" APPLIED CATALYSIS, vol. 8, 16 August 1963 (1963-08-16), pages 149-165, XP002595709
- A. DAKKA ET AL.: "OPTICAL STUDY OF TITANIUM DIOXIDE THIN FILMS PREPARED BY R.F. SPUTTERING" M.J. CONDENSED MATTER, vol. 2, no. 2, 31 December 1999 (1999-12-31), XP002595710
- U. BARDI: "ON THE COMPOSITION AND STRUCTURE OF THIN LAYERS OF TITANIUM OXIDE ON PLATINUM SURFACES" CATALYSIS LETTERS, vol. 5, 15 March 1990 (1990-03-15), pages 81-88, XP002595711

## Description

### Technical Field

The present invention pertains to a vanadium/titania-based catalyst for removing nitrogen oxides at a relatively low temperature window. More specifically, the present invention relates to a vanadium/titania-based catalyst containing vanadium trioxide (V₂O₃) and/or vanadium tetraoxide (V₂O₄) and having excellent ability to remove nitrogen oxides at a wide temperature window, particularly, at a relatively low temperature window and a process for removing nitrogen oxides using the same.

### Background Art

Generally, nitrogen oxides are generated from a stationary source such as an industrial boiler, a gas turbine, a steam power plant, a waste incinerator, a marine engine, and a petrochemical plant. A technology of removing nitrogen oxides may be classified into the following three methods. Firstly, a fuel denitrification method includes treating a fossil fuel to remove nitrogen compounds contained therein. A second method includes improving a combustion condition. At this time, the improvement of the combustion condition may be accomplished through an excess air feeding and a multi-stage combustion process in consideration of the type of a fuel. Finally, a post-treating method includes treating an exhausted gas to remove nitrogen oxides.

In the fuel denitrification method, even though the fossil fuel is treated at relatively high temperatures under hydrogen for a long time in order to remove nitrogen oxides contained in a coal, only about 16 % of total nitrogen oxides content is removed. Additionally, in the case of the second method to improve the combustion condition, it is impossible to remove nitrogen oxides in efficiency of 30-40 % or more because an exhaustion condition of nitrogen oxides is inversely related to a thermal efficiency.

Among the three methods, the post-treatment is sufficiently competitive in terms of removing efficiency of nitrogen oxides, thus being commercialized.

The post-treatment is roughly classified into wet and dry treating methods. In this regard, the wet treating method has advantages in that nitrogen oxides and sulfur oxides are simultaneously removed, and thus is applied to a process in which a small amount of nitrogen oxides is emitted. However, it is required to oxidize NO into NO₂ because a solubility of NO in water is poor, thus not securing economic efficiency. In addition, undesirably, NO₃ and N₂O₄ generated as a side product during oxidizing NO into NO₂ should be re-treated.

Accordingly, the dry treating method is being watched with keen interest. The dry treating method is classified into a selective non-catalytic reduction (SNCR) process in which nitrogen oxides are selectively reduced into nitrogen and moisture by spraying ammonia into nitrogen oxides at a relatively high temperature ranging from about 850 to 1050°C without using a catalyst, and a selective catalytic reduction (SCR) process in which nitrogen oxides are reduced into nitrogen and moisture at a relatively low temperature of about 150 to 450 °C using a catalyst. The SNCR process has an advantage in that 50 % or more of nitrogen oxides are removed at relatively low costs, but has disadvantages in that unreacted ammonia forms ammonium salts, thus plugging or corroding a device positioned after a reactor. Further, a narrow operation temperature range is still problematic. Therefore, the selective catalytic reduction is being considered as a useful approach for removing nitrogen oxides generated from a stationary source in views of economic and technological efficiency.

In the SCR process, nitrogen oxides such as nitrogen monoxide (NO) and nitrogen dioxide (NO₂) are reduced into nitrogen and moisture using ammonia as a reducing agent in the presence of the catalyst, as shown in the following Reaction equations 1 to 4. At this time, an exhausted gas contains oxygen as well as nitrogen oxides, thus, practically, the reduction of nitrogen oxides is accomplished according to the Reaction equations 3 and 4.

Reaction equation 1 6NO + 4NH₃ → 5N₂ + 6H₂O

Reaction equation 2 6NO₂ + 8NH₃ → 7N₂ + 12H₂O

Reaction equation 3 4NO + 4NH₃ + O₂ → 4N₂ + 6H₂O

Reaction equation 4 2NO₂ + 4NH₃ + O₂ → 3N₂ + 6H₂O

However, undesirably, ammonia used as the reducing agent reacts with oxygen, thus producing nitrogen and nitrogen oxides, as shown in the following Reaction equations 5 to 8.

Reaction equation 5 4NH₃ + 3O₂ → 2N₂ + 6H₂O

Reaction equation 6 4NH₃ + 4O₂ → 2N₂O + 6H₂O

Reaction equation 7 4NH₃ + 5O₂ → 4NO + 6H₂O

Reaction equation 8 4NH₃ + 7O₂ → 4NO₂ + 6H₂O

Usually, the oxidation of ammonia is accelerated with an increase of a temperature, and competes with the reduction of nitrogen oxides. Hence, a conversion of nitrogen oxides depends on the temperature. In the case of the exhausted gas without moisture, the oxidation of ammonia according to the Reaction equation 6 does rarely occur, but nitrogen oxides are generated according to the Reaction equations 7 and 8. At this time, a reaction rate of ammonia with oxygen is increased with an increase in the temperature.

Meanwhile, in case that the exhausted gas contains moisture and sulfur oxides, the moisture and sulfur oxides form salts, thus reducing the activity of the catalyst. The catalyst is poisoned by the moisture and/or the sulfur oxides as set forth in the following Reaction equations 9 to 12.

Reaction equation 9 2NH₃ + H₂O + 2NO₂ → NH₄NO₃ + NH₄NO₂

Reaction equation 10 2SO₂ + O₂ → 2SO₃

Reaction equation 11 NH₃ + SO₃ + H₂O → NH₄HSO₄

Reaction equation 12 SO₃ + H₂O → H₂SO₄

In the Reaction equation 9, nitrogen dioxide reacts with ammonia to produce ammonium nitrate. The as-synthesized ammonium nitrate is known to be decomposed at 150°C or higher. Thus, the catalyst is not poisoned by ammonium nitrate at 150°C or higher. Practically, ammonia is fed into the exhausted gas at 150°C or higher, and the catalyst is poisoned by sulfates formed according to the Reaction equation 11, which remain on the catalyst without being decomposed. At this time, such sulfates are produced from sulfur trioxide generated according to the Reaction equation 10. Furthermore, sulfuric acid is produced according to the Reaction equation 12, causing corrosion of a catalyst bed and other devices in a subsequent stage to be corroded.

The production of sulfur trioxide according to the Reaction equation 10 is increased at relatively high temperatures. Thus, there remains a need to develop a catalyst capable of selectively reducing nitrogen oxides at a relatively low temperature window in order to suppress the production of sulfates and sulfuric acid according to the Reaction equations 11 and 12.

Various catalysts from precious metal catalysts to basic metal catalysts have been proposed in the SCR technology. Furthermore, it is reported that supports for the metal catalyst play an important role in the SCR. In this regard, most of the recently developed SCR catalysts include vanadium as an active material, and for example, the desirable SCR performance is obtained by use of a catalyst in which vanadium pentoxide (V₂O₅) is supported on titania (TiO₂), alumina (Al₂O₃) or silica (SiO₂). At this time, the most important one of criteria of the support is the resistance to sulfur. In fact, titania is mainly used as support in commercialized vanadium-contained catalysts. In addition, a catalyst including tungsten or molybdenum is also being developed to suppress sulfur trioxide produced according to the Reaction equation 10.

In order to better understand the background of the invention, a description will be given of conventional technologies for the catalyst containing vanadium as active material. EP-A-0314392 and US-A-4221768 disclose the catalytic removal of NOₓ from flue gas.

U.S. Pat. No. 4,152,296 discloses a method of producing a denitrification catalyst comprising impregnating vanadium sulfate (VSO₄), vanadyl sulfate (VOSO₄), or a mixture thereof onto TiO₂ carrier in such a way that at least 0.1 %, preferably 0.35 to 1.35 % of vanadium element is contained in the catalyst based on a weight of the carrier, and then reacting a mixed gas consisting of ammonia and an inert gas with the impregnated carrier at 300-520°C. The resultant denitrification catalyst has a pore volume of 0.3 to 0.45 cc/g and a specific surface area of 20 to 50 m²/g.

U.S. Pat. No. 4,182,745 discloses a denitrification catalyst having activity at 250 to 450 °C, which is produced by impregnating a salt of a transition metal such as Cu, Ti, V, Cr, Mn, Fe, Co, and Ni with a heteropoly acid such as silicotungstic acid, silicomolybdic acid, phosphotungstic acid, and phosphomolybdic acid on a heat-resistant porous material such as alumina, silica, and silica-alumina acting as a carrier, and drying and calcinating the resulting mixture. In this regard, the carrier preferably has a specific surface area of 50 m²/g or more and a pore volume of 0.2 to 1.5 cc/g.

Further, U.S. Pat. No. 4,929,586 discloses a catalyst for removing NOₓ, in which an active material such as V₂O₅, MoO₃, WO₃, Fe₂O₃, CuSO₄, VOSO₄, SnO₂, Mn₂O₃, and Mn₃O₄ is supported on a titania carrier (TiO₂) with an anatase crystalline structure. At this time, a conversion of NOₓ is about 90 % at 350°C. The titania carrier has a micropore porosity of 0.05 to 0.5 cc/cc, a macropore porosity of 0.05 to 0.5 cc/cc, and a total porosity of 0.8 cc/cc or lower. In this regard, the micropore porosity means a porosity of pores with a pore size of 600 A or less, and the macropore porosity means a porosity of pores with a pore size of 600 Å or more.

Furthermore, U.S. Pat. No. 5,045,516 discloses a method of producing a catalyst for removing nitrogen oxides, in which molybdenum trioxide and 10 % or less vanadium pentoxide are supported on TiO₂. In this regard, TiO₂ includes 500 ppm or less calcium, 100 ppm or less iron, and 60 % or more anatase crystal, and has a mean particle size of 10 to 100 nm, a mean pore radius of 10 to 30 nm, and a BET surface area of 10 to 80 m²/g to prevent the catalyst from being poisoned by arsenic compounds contained in an exhausted gas.

Moreover, U.S. Pat. No. 6,054,408 discloses a catalyst for removing nitrogen oxides, in which 0.01 to 5 wt% molybdenum trioxide and 0.01 to 5 wt% vanadium pentoxide are supported on an anatase-typed titania (TiO₂) carrier. The anatase-typed titania carrier includes 5 % or less rutile-typed crystalline structure, 500 ppm or less sodium, 500 ppm or less potassium, 500 ppm or less iron, and 0.5 % or less phosphorus.

U.S. Pat. No. 4,952,548 discloses a catalyst for removing nitrogen oxides, the atomic ratio of Ti : Mo and/or W : V being 80-96.5:3-15:0.5-5. Particularly, a size of a TiO₂ crystal is limited to prevent a TiO₂ surface of the catalyst from being poisoned by heavy metals, and thus has a range of 185 to 300 Å in the direction of plane (101) according to a Sherrer equation.

Furthermore, U.S. Pat. No. 4,916,107 discloses a catalyst for removing nitrogen oxides, which includes titanium oxides, tungsten oxides, and oxides of at least one metal selected from the group consisting of vanadium, iron, niobium, and molybdenum. In detail, an anatase-typed titania (TiO₂) is used as a carrier, the catalyst has a specific surface area of 50 ± 15 m²/g, a first mean particle size of 30 nm, a dry loss of 1.5 wt%, and an ignition loss of 2 wt%. In addition, the catalyst comprises 99.5 % TiO₂, 0.3 wt% Al₂O₃, 0.2 wt% SiO₂, 0.01 wt% Fe₂O₃, and 0.3 wt% HCl.

The above patents specify physical properties of titania used as the carrier, but do not mention how the properties and states of an active metal oxides supported on the carrier and the reaction participation of lattice oxygen due to the properties and states of the active metal oxides affect the SCR performance. Additionally, most of the above patents disclose that vanadium used as the active metal is vanadium pentoxide.

As described above, commercialized denitrification catalysts include tungsten or molybdenum to improve activity and poison resistance to sulfur dioxide of a conventional V₂O₅/TiO₂-based catalyst. However, the conventional V₂O₅/TiO₂-based catalyst is disadvantageous in that its denitrifying efficiency is relatively poor at 260°C or lower. Further, taking into consideration that the conventional V₂O₅/TiO₂-based catalyst is generally arranged after a desulfurization equipment in a flue gas denitrifying process, an additional power should be provided to increase a temperature of the flue gas having been lowered to 100°C or lower. In practical, it is required to consume a great amount of power corresponding to about five to ten % of a total capacity of a power plant to raise the temperature of the flue gas by approximately 100°C.

When the conventional equipments are utilized in the denitrifying process, a space of about 350°C, at which the conventional V₂O₅/TiO₂-based catalyst is activated, is so small that the catalyst is inevitably installed in the space of relatively low temperatures. Therefore, there is needed an additional heat source for increasing a temperature of the flue gas. Furthermore, the denitrifying process at relatively high temperatures is disadvantageous in that it increases the thermal fatigue of a catalytic bed, thus reducing a life span of the catalyst, and promotes the oxidation of sulfur dioxide, thus producing a catalyst poison such as ammonium sulfate.

Hence, there remains a need to develop a vanadium/titania-based catalyst capable of maintaining high catalytic activity at a relatively low maximum temperature of 260°C to secure improvement of economic efficiency, suppress the production of the catalyst poison, and improve a life span of the catalyst unlike the conventional V₂O₅/TiO₂-based catalyst.

The conventional commercial V₂O₅/TiO₂-based catalyst is activated at a relatively high temperature of 300°C or higher, but its activity is drastically reduced at about 220°C or lower. Because an activation energy is low at a temperature range of about 220°C or lower, it is difficult to cause the oxidation/reduction of the catalyst. Accordingly, a conversion of nitrogen oxides is low at 220°C or lower, and an exhaustion concentration of unreacted ammonia is high. Nitrogen oxides and unreacted ammonia in the flue gas are poisonous to human body, and unreacted ammonia reacts with sulfur compounds and moisture in the flue gas to form ammonium salts, thus deactivating the catalyst. Therefore, it is necessary to develop a catalyst with excellent oxidizing and/or reducing ability at even relatively low temperature window.

### Disclosure of the Invention

Accordingly, the present invention has been made keeping in mind the above problems occurring in the prior arts, and an aspect of the present invention is to provide a vanadium/titania-based catalyst with high activity at low temperatures as well as at high temperatures. The catalyst contains a titania support useful to produce a catalyst with high activity at a relatively low temperature window.

It is another aspect of the present invention to provide a SCR process for removing nitrogen oxides in a flue gas using the vanadium/titania-based catalyst.

Further aspects and/or advantages of the invention will be set forth in part in the description which follows and, in part, will be obvious from the description, or may be learned by practice of the invention.

According to one aspect of the present invention, there is provided a vanadium/titania-based catalyst for selectively removing nitrogen oxides from a flue gas as disclosed in the wording of independent claim 1. Further embodiments are disclosed in dependent claims 2 to 8.

The above vanadium/titania-based catalyst may be formed in such a way that various types of a structure (e.g., a metal plate, a metal fiber, a ceramic filter or honeycomb) are coated therewith, and the catalyst may be coated on a tube, a duct and/or wall in equipments such as an air pre-heater and a boiler as explicitly disclosed in the wordings of claims 9 to 11.

According to another aspect of the present invention, there is provided a process of selectively reducing and removing nitrogen oxides in a flue gas, which comprises carrying out a selective catalytic reduction by use of ammonia as a reducing agent at a temperature of 150 to 450 °C and a gas hourly space velocity (GHSV) of 1,000 to 60,000 hr⁻¹ in the presence of the catalyst as described above, as disclosed in the wording of independent process claim 12. Further embodiments are disclosed in dependent claims 13 and 14.

### Brief Description of the Drawings

The above and other aspects, features and other advantages of the present invention will be more clearly understood from the following detailed description taken in conjunction with the accompanying drawings, in which:
FIG. 1 is a graph showing a conversion of nitrogen oxides as a function of a reaction temperature for catalysts according to Examples and Comparative Examples;
FIGS. 2A and 2B are graphs showing XPS analysis results of Ti 2p and V 2p of a catalyst according to Example 5 of the present invention, respectively;

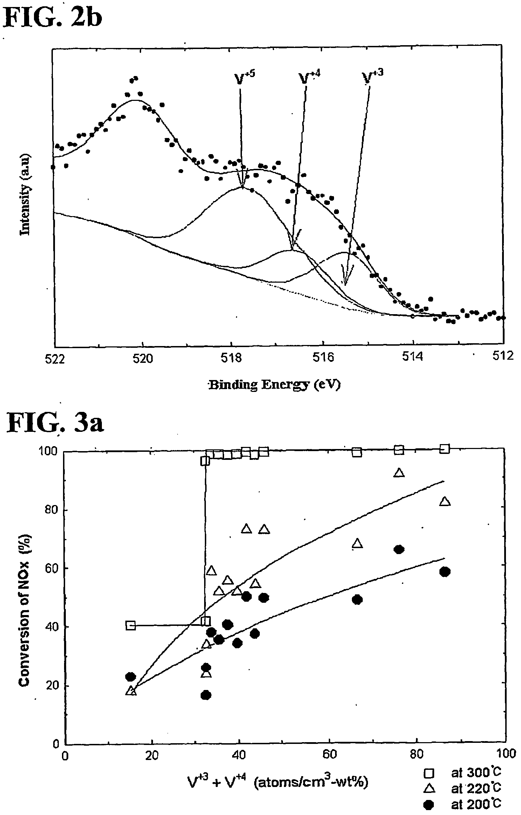

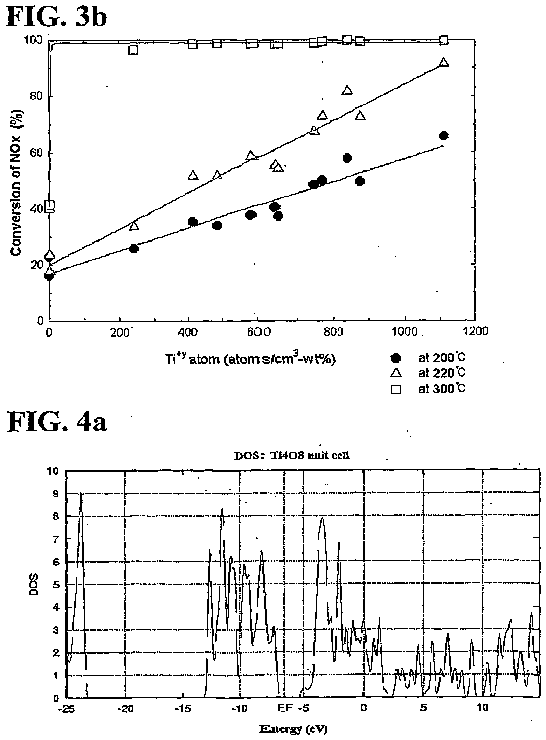

FIG. 3A is a graph showing a conversion of nitrogen oxides at a temperature of 200, 220, and 300°C as a function of a generalized value which is obtained by dividing the number of 4+ and 3+ valences of vanadium atoms per unit volume by wt % of the supported vanadium for catalysts according to Examples 1 to 10 of the present invention, and FIG. 3B is a graph showing a conversion of nitrogen oxides at a temperature ranging from 200, 220, and 300°C as a function of a generalized value which is obtained by dividing the number of 3+ and 2+ valences of titanium atoms per unit volume by wt % of the supported vanadium for catalysts according to Comparative Examples 1 to 3 of the present invention;
FIG. 4A illustrates a computer simulation result showing a density of state (DOS) as a function of an energy level for anatase-type stoichiometric titania, and FIG. 4B illustrates a computer simulation result showing a density of state (DOS) as a function of an energy level for a Ti₄O₇ compound which is formed by removing one oxygen atom from Ti₄O₈ via reduction;
FIG. 5 is a graph showing an XPS analysis result of Ti 2p of a titania support without vanadium-loading according to Comparative Example 1;
FIG. 6 is a graph showing a conversion of nitrogen oxides at a temperature of 200, 220, and 300°C as a function of an O/Ti molar ratio of each titania without vanadium-loading according to Preparation Examples 1 to 10 and Comparative Preparation Examples 1 to 5;
FIG. 7 is a graph showing a conversion of nitrogen oxides as a function of a reaction time for catalysts according to Examples 1, 4, 5, 7, 9, and 10 and Comparative Examples 1, 3, 4, and 5 to secure re-oxidation characteristics of the catalysts, after the catalysts are reduced using ammonia at 400°C for 30 min and oxygen is then additionally fed in conjunction with nitrogen oxides and ammonia into a reactor at 180°C; and
FIG. 8 is a graph showing a conversion of nitrogen oxides and an amount of unreacted ammonia as a function of a reaction period for a catalyst according to Example 1 of the present invention, in case that a flue gas containing sulfur dioxide and moisture is fed into a reactor containing the catalyst at 200 °C.

### Best Mode for Carrying Out the Invention

The present invention provides a vanadium/titania-based catalyst having a high nitrogen oxide-removal activity at relatively a low temperature window in the SCR process. The present invention also contributes to finding factors affecting the activity of the vanadium/titania-based catalyst by surface properties of the vanadium/titania-based catalyst, and discloses physical properties of a titania support affecting the surface properties of the vanadium/titania-based catalyst. Furthermore, the present invention describes the effects of physical properties of the catalyst on the removal, the oxidation/reduction, and the re-oxidation of nitrogen oxides according to the SCR process.

Prior to a detailed description of the present invention, a detailed description will be given of the SCR process. The SCR process is affected by the following characteristics of the catalyst:
1) Stability of a surface of vanadium oxides on titania,
2) Structure of vanadium oxide,
3) Number and strength of V=O bonds,
4) Acidic sites on the surface of vanadium oxides, and
5) Reducing ability of a vanadium oxide-based catalyst.

In detail, firstly, the stability of the surface of vanadium oxides on titania relates to the fact that vanadium oxides supported on titania are changed into other forms, thereby losing a catalytic function or being deactivated. The catalyst should have this characteristic.

Secondly, the structure of vanadium oxide affects an activity of the catalyst. Vanadium oxide is classified into polymeric vanadate, monomeric vanadate, and crystallite V₂O₅ according to a structure thereof. In general, polymeric vanadate more affects the catalytic activity than monomeric vanadate.

Thirdly, a reaction rate is proportional to the number of the V=O bonds, and the V=O bonds provide an adsorption site for ammonia.

Fourthly, acidic sites on the surface of vanadium oxides may be classified into both Lewis and Brönsted acidic sites. At this time, the acidic sites are considered as an important factor because ammonia is adsorbed into the Lewis acidic sites and Brönsted acidic sites in different manners, and an initial step of the SCR is the adsorption of ammonia into the acidic sites.

Fifthly, the reducing ability of a vanadium oxide-based catalyst is one of the most important factors affecting the oxidation and/or reduction of nitrogen oxides, and the reduction of reactants relies on a reducing force of the vanadium oxide-based catalyst. The oxidation as well as the reducing force of the vanadium oxide-based catalyst is very important. The vanadium oxide-based catalyst non-stoichiometrically containing vanadium oxides and/or titanium oxides smoothly receives oxygen gas during the SCR to produce lattice oxygen in the catalyst, and the as-produced lattice oxygen is activated. Thus, the oxidizing ability of the catalyst also affects the activity of the catalyst. The activated lattice oxygen of the catalyst with high denitrification efficiency easily participates in the SCR even at the relatively low temperature window. The above-described considerations play an important role in the selective removal of nitrogen oxides.

The removal of nitrogen oxides according to the SCR may be based on the following mechanisms: a Langmuir-Hinshelwood mechanism in which gaseous ammonia and nitrogen oxides are all adsorbed on the catalyst to be reacted with each other, an Eley-Rideal mechanism in which only ammonia gas is adsorbed on the catalyst and the adsorbed ammonia reacts with gaseous nitrogen oxides, or a Dual site mechanism in which ammonia reacts with nitrogen oxides according to the Langmuir-Hinshelwood mechanism and Eley-Rideal mechanism.

Particularly, in case that the nitrogen oxides are selectively removed using ammonia as a reducing agent in the presence of the vanadium/titania-based catalyst, it is believed that the removal of nitrogen oxides is achieved by the Dual site mechanism. In other words, the SCR of nitrogen oxides is carried out according to the following Reaction equations 13 to 17.

Reaction equation 13 NH₃ + V⁵⁺-OH ↔ V⁵⁺-ONH₄

Reaction equation 14 V⁵⁺-ONH₄+V⁵⁺=O ↔ V⁵⁺-ONH₃-V⁴⁺-OH

Reaction equation 15 NO+V⁵⁺-ONH₃-V⁴⁺-OH → N₂ + H₂O + V⁵⁺ -OH + V⁴⁺-OH

Reaction equation 16 2V⁴⁺-OH ↔ H₂O + V³⁺ + V⁵⁺=O

Reaction equation 17 O₂+2V³⁺ → 2V⁵⁺=O

The lattice oxygen of the catalyst participates in the reduction of nitrogen oxides as shown in the Reaction equation 15, and gaseous oxygen supplement a space of the catalyst from which lattice oxygen is removed as shown in the Reaction equation 17. In this regard, the oxidation and/or reduction ability of vanadium oxides due to the active electron movement of vanadium oxides contributes to promoting the participation of lattice oxygen into the reduction of nitrogen oxides and the supplementation of gaseous oxygen in the space of the catalyst from which the lattice oxygen is removed. In the Reaction equations 13 to 17, when nitrogen oxides are selectively reduced by use of ammonia as the reducing agent, a valence of vanadium varies from 5+ to 3+ due to the electron movement of vanadium. That is to say, the vanadium non-stoichiometrically contained in the catalyst readily receives or releases lattice oxygen to change the valence of vanadium from 5+ to 3+.

After a vanadium precursor is impregnated onto titania, the vanadium precursor deposited on titania is dried and calcined to provide lattice oxygen of titania to vanadium by virtue of a higher oxygen affinity of vanadium than titanium. Oxygen contained in the titania support is classified into adsorbed oxygen and lattice oxygen. In this respect, the adsorbed oxygen does not contribute to the SCR upon supporting vanadium onto the titania. Examples of lattice oxygen include oxygen combined with titanium, oxygen in H₂O, oxygen combined with hydrogen to form a hydroxyl group, and oxygen combined with carbon. Among them, oxygen combined with titanium is mostly used to produce vanadium oxide. Accordingly, a ratio of oxygen combined with titanium to the titanium can affect the activity of the catalyst. Further, as titania is reduced, vanadium holds oxygen generated by the reduction of the titania in common with titanium to form vanadium oxide. At this time, the offer of oxygen of titania to vanadium affects the formation of vanadium oxide. That is to say, the reduction of titania affects a valence distribution of vanadium on a surface of the catalyst. The valence distribution affects removing efficiency of nitrogen oxide in the SCR reaction. Particularly, in the case that nitrogen oxide is selectively reduced at relatively low temperatures in the presence of the vanadium/titania-based catalyst, the participation of lattice oxygen into the reduction of nitrogen oxide and the reoxidation of gaseous oxygen into lattice oxygen are closely related to electrons generated due to the valence change of vanadium. Thus, the reduction properties and/or the re-oxidation properties of the catalyst depend on the degree of the transfer of electrons. Because non-stoichiometric vanadium oxide is produced in the catalyst, the transfer of the electrons becomes more active, and thus the reduction and/or re-oxidation properties of the catalyst are improved to desirably remove nitrogen monoxide through the SCR reaction. Hence, it is preferred to allow the catalyst to contain as many non-stoichiometric vanadium oxides as possible to increase effective electrons and a driving force of electrons.

Hereinafter, a detailed description will be given of the representative preparation of the catalyst according to the present invention.

A vanadium precursor is dissolved in an aqueous solution. At this time, it is preferred that an organic acid is added to the aqueous solution in conjunction with the vanadium precursor to increase solubility of the vanadium precursor. Titania, to be used as a support, is then added to the aqueous solution containing the vanadium precursor and organic acid to produce slurry.

The slurry thus produced is heated to about 50-70°C while it is agitated to evaporate water from the slurry. In this regard, a vacuum evaporator is preferably used to evaporate water from the slurry. The resulting slurry is then dried at about 80-120°C, preferably about 100°C for 5-30 hours, and is calcined at about 350-450°C under an air or a nitrogen atmosphere for about 1-10 hours to produce the catalyst of the present invention.

Non-limiting, illustrative examples of the vanadium precursor useful in the present invention are ammonium metavanadate (NH₄VO₃) or vanadium oxytrichloride (VOCl₃).

As previously discussed, a species and a surface distribution ratio of the supported vanadium oxide depend on the reduction of titania used as a support, thereby determining a removal efficiency of nitrogen oxide at the relatively low temperature window.

Although other physical properties of titania such as a specific surface area, a pore volume, and a mean pore size are not critical factors affecting the SCR, it is preferable that the titania has the specific surface area of about 30-350 m²/g, the pore volume of about 0.1-0.8 cc/g, and the mean pore size of about 30-400 Å.

In accordance with the present invention, the most critical factor affecting the SCR performance is the reduction ability of titania. That is to say, when the lattice oxygen of titania is sufficiently provided to vanadium, the desirable SCR performance may be accomplished.

H₂-TPR (temperature programmed reduction) test is useful in evaluating the reduction property of titania. According to the present invention, the H₂-TPR test is carried out in the following exemplified procedure. 50 mg of titania particles having a mean diameter of 150 µm or less are heated from room temperature to 900°C at a heating rate of 10 °C/min while 5 volume% hydrogen is fed into a tube at a flow rate of 30 cc/min, and an amount of hydrogen consumed is measured. At this time, titania is pre-treated at 250°C for 30 min under a nitrogen atmosphere to remove moisture from a surface thereof.

According to the present invention, it is preferred that an amount of hydrogen consumed per unit weight of titania is about 1.384 µ mol/g or more. At this time, the amount of the consumed hydrogen may be measured by various experiments, and some representative experiments are described in the following Preparation Examples and Comparative Preparation Examples.

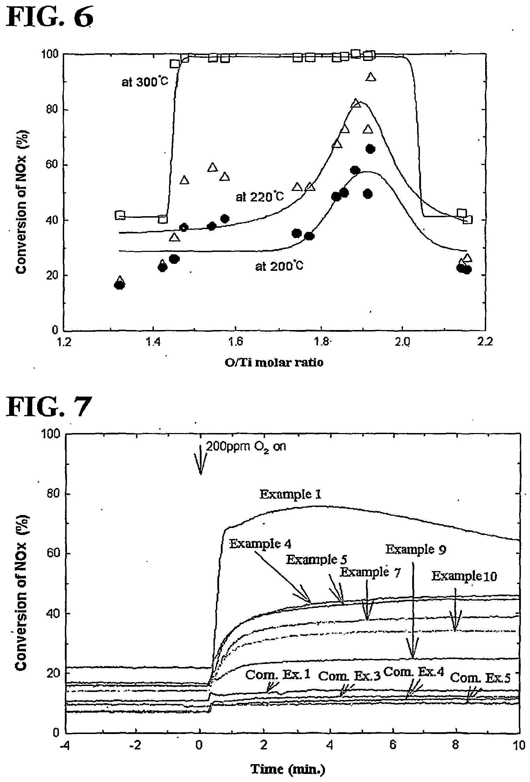

Furthermore, it is preferable that a molar ratio (O/Ti) of oxygen to titanium in titania without vanadium-loading is within a range of about 1.47-2.0. This is also verified by various experiments, and results of some representative Examples are illustrated in FIG. 6. From FIG. 6, it can be seen that a catalyst employing titania with the molar ratio of 1.47-2.0 as the support has relatively high denitrification efficiency at low temperatures.

When the O/Ti ratio is 1.47-2.0, an activity of the catalyst is increased. Particularly, as the O/Ti ratio approaches 2.0, an oxygen content in titania is increased, thus increasing an amount of oxygen consumed in the reduction of nitrogen oxide and the activity of the catalyst. Accordingly, an amount of hydrogen consumed in the reduction of nitrogen oxide may be increased, and vanadium oxide with high activity may be formed because oxygen of titania is readily provided while the vanadium precursor is calcined.

Therefore, the activity of the catalyst is maximum when the O/Ti ratio is about 2, and is increased as a chemical formula of titania approaches stoichiometric TiO₂. However, when the O/Ti ratio is more than 2, electrons excited by an external energy are transferred into excessively oxidized oxygen, and are consumed in the catalyst in which vanadium is supported on titania, thus the exchange of electrons with reactants is not performed actively. Hence, when the O/Ti ratio is more than 2, titania is insufficiently reduced, and oxygen is not readily provided while the vanadium precursor is calcined. Further, the lattice oxygen of such titania may be increased because titania is sintered at relatively high temperatures during its production. At this time, the specific surface area of titania is reduced because titania is sintered at relatively high temperatures, thus reducing the contact between titania and vanadium to undesirably reduce the formation of vanadium oxide.

Meanwhile, the catalyst of the present invention is analyzed using an X-ray photoelectron spectroscope (XPS). Particularly, the XPS is useful in examining a chemical state of an active component of the catalyst while the catalyst is produced. Hereinafter, a detailed exemplified description will be given of the detection of V⁵⁺, non-stoichiometric vanadium atoms, and non-stoichiometric titanium atoms using the XPS, by providing lattice oxygen into vanadium, below.

After the catalyst produced according to the above procedure is dried at about 100°C for about 24 hours to completely remove moisture contained therein, the species of oxides formed on a surface of the catalyst and a ratio among them may be confirmed by use of the XPS (for example, ESCALAB 201 manufactured by VG Scientific Co.). In this regard, Aluminum X-ray monochlomatic (A1 Kα monochlomatic; 1486.6 eV) is used as an excitation source, and an XPS analysis is conducted without a sputtering and an etching process so as to maintain a vacuum pressure at about 10-12 mmHg. Vanadium, titanium, oxygen, and carbon elements on the surface of the catalyst are then analyzed with a wide scanning spectrum to measure the binding energy and intensity. Different characteristic peaks of each element shown in the spectra are separated from each other based on intrinsic binding energies of oxides containing the corresponding element to analyze the species and distribution ratio of oxides on the surface. The characteristic peaks are separated from each other according to a Lorentzian-Gaussian method.

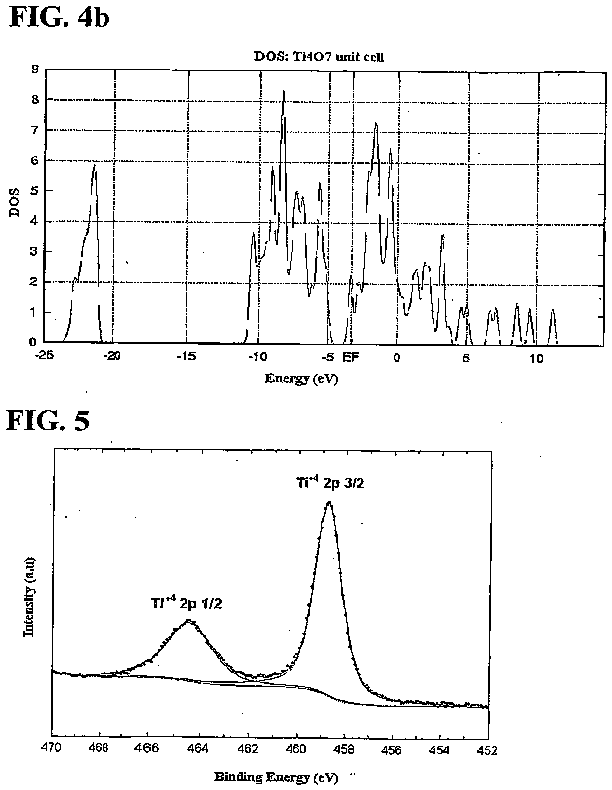

From FIG. 5, it can be seen that the binding energy of Ti⁴⁺ is 458.8 eV at Ti 2p_{3/2} and 464.5 eV at Ti 2p_{1/2}. Further, the binding energy of Ti³⁺ which results from the reduction of Ti⁴⁺ is 457.9 eV at Ti 2p_{3/2} and 463.6 eV at Ti 2p_{1/2}, and the binding energy of Ti²⁺ is 456.3 eV at Ti 2p_{3/2} and 462 eV at Ti 2p_{1/2}.

As for oxygen combined with titanium, it is analyzed with O 1s. Generally, oxygen in titania exists in a form of oxygen combined with titanium (O-Ti), oxygen contained in moisture or hydroxyl groups physically adsorbed in the catalyst (-OH), and oxygen combined with carbon (C-O). Their binding energies are 529.9 eV, 530.2 eV, and 531.6 eV, respectively. In addition, Ti 2p and O 1s of titania are analyzed to determine a molar ratio of oxygen to titanium, and the molar ratio of oxygen to titanium is intimately associated with removing efficiency of nitrogen oxide, as previously discussed. This is confirmed by Preparation Examples of the present invention, and the results are illustrated in FIG. 6.

According to the present invention, a species and a distribution ratio of vanadium oxides are properties directly indicating the ease of movement of the electrons between reactants and vanadium as the active component on the catalyst. In this regard, through an XPS analysis, it can be seen that the binding energy of V⁵⁺ is 517.2 eV at V 2p_{3/2}, V⁴⁺ is 516.1 eV at V 2p_{3/2}, and V³⁺ is 515.1 eV at V 2p_{3/2}.

An area (the number of photoelectrons obtained per unit hour) is calculated from the XPS analysis in consideration of an atomic sensitivity factor to calculate the number of non-stoichiometric vanadium atoms or titanium atoms per unit volume (cm³) of the catalyst. However, it should be noted that such a number varies with an amount of vanadium loaded on the titania support. The amount of vanadium supported on titania is 1-5 wt% based on the weight of the catalyst. In consideration of the above, the number of atoms/cm³ is divided by wt% of the supported vanadium to obtain a generalized value. Such a generalized value is expressed in a unit of "atoms/cm³ wt%", hereinafter. In accordance with the present invention, the generalized values for the non-stoichiometric vanadium atoms of V⁴⁺ and V³⁺ should be from 34 atoms/cm³·wt% to 87 atoms/cm³·wt%, and the generalized values for the non-stoichiometric titanium atoms of Ti³⁺ and Ti²⁺ should be from 415 atoms/cm³·wt% to 1112 atoms/cm³·wt%.

In the light of the foregoing, nitrogen oxide is efficiently removed in the presence of non-stoichiometric vanadium atoms at the relatively low temperatures because the vanadium oxides in which vanadium is non-stoichiometrically combined with oxygen (e.g., vanadium trioxide) are partially reduced and thus contain free electrons, unlike V₂O₅ with a valence of 5+. For instance, vanadium tetraoxide contains one mole of electron while vanadium trioxide contains two moles of electron, thus the transfer of the electrons may be driven with low activation energy. In fact, the electrons will be readily transferred to participate in the oxidation and/or reduction reaction at high temperatures. Thus, in order to properly evaluate the SCR performance of the catalyst, a careful consideration should be made as to whether electrons may readily be transferred at low temperatures. At this time, the transfer of electrons closely depends on the free electrons allowing the participation of the electrons in the oxidation and/or reduction. The free electrons may exist in VOₓ such as V₂O₃ which is reduced from V₂O₅. Accordingly, contrary to the conventional catalyst, the activity of the catalyst is improved by various valences of vanadium oxide on the titania support and the distribution thereof.

Titania with excellent reduction ability easily transfers the lattice oxygen therein into vanadium having excellent oxygen affinity when the vanadium is supported on titania, thereby the titania support is reduced while the vanadium is oxidized. Hence, the vanadium receives the lattice oxygen from the titania to bond titanium to vanadium through an oxygen bridge. At this time, the disproportion stemming from different valences between vanadium and titanium leads to the reduction of metal oxides to the non-stoichiometric ones such as V^{x+} and Ti^{y+}(x≤4 and y≤3). That is to say, since the lattice oxygen is combined with titanium with the valence of 4+ in titania, vanadium will take a form of V⁴⁺ while titania is reduced after vanadium is impregnated onto the titania support. Two V⁴⁺ may be combined with each other to form stable V⁵⁺. Practically, some V⁴⁺ are combined with each other to form V⁵⁺ and V³⁺. As a result, the as-prepared catalyst comes to include V⁴⁺ therein. As described above, the catalyst according to the present invention includes non-stoichiometric metal oxides, and has excellent removing efficiency of nitrogen oxide at relatively low temperatures.

In the case of deviating from the scope of the present invention, a titania support is not sufficiently reduced and it is difficult to form V⁴⁺ and V³⁺, as shown in Examples according to the present invention. For example, according to Comparative Examples, the O/Ti ratio of titania is from 1.3 to 1.4, thus titania is not desirably reduced because of insufficient lattice oxygen.

On the other hand, the O/Ti ratio of titania according to Comparative Preparation Examples 4 and 5 is about 2.15, but the activity of the catalyst is low even though an oxygen content in titania is high. The reason therefor is that titania is not combined with vanadium at the interface therebetween due to a low reduction ability of the titania, and rather combined with gaseous oxygen to form vanadium oxide while vanadium is impregnated onto titania and calcined. The vanadium oxide thus formed is different from that formed by the reduction of the titania and bonded to titania through the oxygen bridge. Thus, the non-stoichiometric vanadium oxides such as V₂O₃ and V₂O₄ may be formed on the titania support, which is out of the scope of the present invention, however, such non-stoichiometric vanadium oxides correspond to the simple combination of the vanadium oxide precursor (e.g., ammonium metavanadate) with gaseous oxygen supplied during the calcination.

In view of the above, it is required to employ a titania support, the O/Ti molar ratio of which is within the range of about 1.47-2.0, to secure an improved nitrogen oxide-removal efficiency in the SCR.

Meanwhile, in the present invention, it is useful to carry out a computer simulation to investigate semiconductor properties of titania without vanadium and of titania in which vanadium is impregnated, that is, stoichiometric Ti₄O₈ (TiO₂) and non-stoichiometric Ti₄O₇. A density of state (DOS) of electrons according to an energy level is obtained by the computer simulation. Then, a relative valence band (hereinafter, referred to as "VB") to oxides, an energy level of conduction band (hereinafter, referred to as "CB") and a band-gap energy are calculated using the DOS. The results are illustrated in FIGS. 4A and 4B. An electron transfer by an external energy from a Fermi level and an energy level of the CB explains how non-stoichiometric vanadium oxide improves efficiency of the SCR. This will be described in detail in Example 3.

In addition, according to the present invention, a temperature programmed surface reaction (TPSR) is conducted to evaluate an oxidizing and a reduction ability of the catalyst. In detail, H₂-TPR (temperature programmed reduction) test is carried out to evaluate the reduction ability of the catalyst, while O₂-TPO (temperature programmed oxidation) test is carried out to evaluate the oxidizing ability of the catalyst. Further, an oxygen-reoxidation test is carried out to evaluate a re-oxidation rate of the catalyst, and will be described in more detail in Examples.

In the H₂-TPR test of the catalyst containing vanadium, 50 mg of catalyst is pre-treated at 400°C for 30 min while air flows through the catalyst at a rate of 30 cc/min, left at 300°C for 90 min or more while nitrogen flows through the catalyst at a rate of 30 cc/min to remove oxygen adsorbed in the catalyst, cooled to room temperature, and heated at a heating rate of 10°C/min to 900°C while 5 volume% hydrogen flows through the catalyst at a rate of 30 cc/min. As a result, a discharged hydrogen concentration is detected by use of a mass spectroscope or a thermal conductivity detector of a gas chromatography to calculate an amount of hydrogen consumed according to a reaction temperature. A temperature at which the hydrogen reduction starts and a temperature at which the hydrogen reduction is maximally accomplished are obtained from the amount of hydrogen consumed. According to the present invention, the hydrogen reduction starts at about 408 °C or lower and is maximally accomplished at about 506°C or lower.

Furthermore, in the O₂-TPO test of the catalyst, the catalyst is heated at a heating rate of 10°C/min to 400°C while 0.5 volume% ammonia is fed into a reactor in which 0.3 g catalyst is charged at a rate of 50 cc/min, and left at 400°C for 30 min to be reduced. The reduced catalyst is then cooled to room temperature, heated at a heating rate of 10°C/min to 600°C while 1 volume% oxygen is fed into the reactor in which the catalyst is charged. A consumed oxygen concentration is monitored with the mass spectroscope. A temperature at which the oxidation is maximally accomplished is obtained from the oxygen concentration according to the reaction temperature. In the case of the present catalyst, oxygen is maximally consumed at about 405°C or lower.

As for the oxygen-reoxidation test, the catalyst is heated at a heating rate of 10°C/min to 400°C while 5000 ppm ammonia flows through the catalyst and left at 400°C for 30 min to be reduced. The SCR reaction is conducted at 180°C while 800 ppm nitrogen oxides and ammonia flow through the vanadium/titania-based catalyst in a NH₃/NOₓ molar ratio of 1 without oxygen. After a predetermined time, 200 ppm of oxygen additionally flows through the vanadium/titania-based catalyst in conjunction with the nitrogen oxides and ammonia, and then a concentration of nitrogen monoxide is monitored. A conversion of nitrogen oxide according to time is obtained from the concentration of nitrogen monoxide, and the re-oxidation ability of the catalyst is evaluated by the degree of an increase of the conversion. According to the present invention, the conversion of nitrogen monoxide is increased by a maximum of 9 % or more and by 8 % or more after 60 min.

Accordingly, the present catalyst can be used to selectively remove nitrogen oxide, and is useful to remove nitrogen oxides in a flue gas containing sulfur oxides.

A process of removing nitrogen oxides is usually conducted at about 150-450°C, preferably 180-350°C, and at a space velocity of about 1000-60000 hr⁻¹, preferably 3000-30000 hr⁻¹ in the presence of the present catalyst. These reaction conditions indicate that the activity of the present catalyst is improved in comparison with an activity temperature region of a conventional V₂O₅/TiO₂-based catalyst

In this regard, it is preferred to feed ammonia as a reducing agent in such a way that a molar ratio of NH₃/NOₓ is about 0.6-1.2. For example, when the molar ratio is excessively low, the removing efficiency of nitrogen oxide is reduced owing to lack of the reducing agent. On the other hand, when the molar ratio is excessively high, unreacted ammonia is undesirably discharged to the atmosphere. Particularly, in the case of treating a flue gas containing sulfur oxides such as sulfur dioxide, the presence of unreacted ammonia should be suppressed to effectively prevent the catalyst from being poisoned by ammonium bisulfate. In consideration of this, it is preferred to treat a flue gas containing sulfur dioxide of about 500 ppm or less.

In conducting the SCR process, sulfur dioxide contained in the flue gas is oxidized into sulfur trioxide on a surface of the catalyst, and sulfur trioxide reacts with moisture and ammonia to produce ammonium bisulfate. Ammonium bisulfate thus produced deposits on the surface of the catalyst, thereby deactivating the catalyst. To prevent the catalyst from being deactivated, the oxidation of sulfur dioxide should be suppressed, the presence of unreacted ammonia must be suppressed, or ammonium bisulfate should be decomposed at relatively low temperatures. The catalyst may be tested using a mixture gas of 150 ppm nitrogen oxides, 15 volume% oxygen, 8 volume% moisture, and 150 ppm sulfur dioxide for 80 days under conditions of a space velocity of 60,000 hr⁻¹ and a NH₃/NOₓ molar ratio of 0.9 in terms of the deactivation of the catalyst.

Meanwhile, the present vanadium/titania-based catalyst may be formed in such a way that various types of a structure (e.g., a metal plate, a metal fiber, a ceramic filter or honeycomb) are coated therewith. The catalyst may also be coated on a tube, a duct and/or wall in equipments such as an air pre-heater and a boiler. Furthermore, the catalyst may be extruded into a particle-type or monolith-type structure by use of a small amount of binder. For the coating or the extrusion, the catalyst is uniformly crashed into particles, the diameter of which should be adjusted taking into consideration an economic aspect or a uniformity and adhesiveness of a coated or extruded structure. A diameter of about 1-10 *µ*m is suitable. Such a coating and extrusion is well known in the art.

A better understanding of the present invention may be obtained by reading the following examples which are set forth to illustrate, but are not to be construed to limit the present invention.

### PREPARATION EXAMPLES 1 TO 10, AND COMPARATIVE PREPARATION EXAMPLES 1 TO 5

### 1) Measurement of a molar ratio (O/Ti) of oxygen combined with titanium to titanium

Samples according to Preparation Examples 1-10 and Comparative Preparation Examples 1-5 were prepared using titania as a support as shown in the following Table 1. Titania was analyzed using an XPS (ESCALAB 201 manufactured by VG Scientific Co.) to measure a molar ratio (O/Ti) of oxygen combined with titanium to titanium.

Ti 2p of titania according to Preparation Example 1 described in the following Table 1 is illustrated in FIG. 5. As shown in FIG. 5, in case of titania onto which vanadium is not impregnated, only titanium with a valence of 4+ exists. This observation was found in other titanias according to Preparation Examples 2-10 and Comparative Preparation Examples 1-5.

Additionally, O 1s of titania according to Preparation Example 1 was analyzed in conjunction with Ti 2p of titania. Oxygen in titania existed in a form of oxygen combined with titanium (O-Ti), oxygen contained in water or hydroxyl groups (-OH) physically adsorbed in the catalyst, and oxygen combined with carbon (C-O). Their binding energies were 529.9 eV, 530.2 eV and 531.6 eV, respectively.

Furthermore, O 1s values of titanias according to Preparation Examples 2-10 and Comparative Preparation Examples 1-5 were analyzed. From the calculation of the O/Ti molar ratio, it can be seen that titania may exist in a non-stoichiometric form (i.e., O/Ti ratio beyond 2 or below 2) as well as stoichiometric TiO₂. To investigate how the O/Ti ratio affects a removal efficiency of nitrogen oxides, in FIG. 6, there is illustrated a graph showing a conversion of nitrogen oxides as a function of the O/Ti molar ratio at 200-300°C. At a relatively low temperature of 200°C, the conversion of nitrogen oxides is relatively high when the O/Ti molar ratio is from 1.47 to 2.0. Accordingly, it was confirmed that titania having the specific range of O/Ti molar ratio is useful as a support.

**TABLE 1**

| | O/Ti ratio at 200°C |
|---|---|
| Preparation Example 1 | 1.92 |
| Preparation Example 2 | 1.88 |
| Preparation Example 3 | 1.91 |
| Preparation Example 4 | 1.91 |
| Preparation Example 5 | 1.86 |
| Preparation Example 6 | 1.57 |
| Preparation Example 7 | 1.47 |
| Preparation Example 8 | 1.54 |
| Preparation Example 9 | 1.74 |
| Preparation Example 10 | 1.77 |
| Comparative Preparation Example 1 | 1.45 |
| Comparative Preparation Example 2 | 1.42 |
| Comparative Preparation Example 3 | 1.32 |
| Comparative Preparation Example 4 | 2.16 |
| Comparative Preparation Example 5 | 2.14 |

### 2) Evaluation of the reducing power of titania

In order to evaluate the reducing power of a titania support used to produce a vanadium/titania-based catalyst, the H₂-TPR test was carried out for each of titania supports according to Preparation Examples 1, 5, and 7, and Comparative Preparation Examples 1, 3, and 4. At this time, details of the H₂-TPR test are given in the following documents:
i) D. A. Bulushev et al., Journal of Catalysis 205 (2002) 115-122
ii) M.A. Reiche et al., Catalysis Today 56 (2000) 347-355
iii) F. Arena et al., Applied Catalysis A : General 176 (1999) 189-199.

50 mg titania sample was heated at a heating rate of 10 °C/min from room temperature to 900 °C while 5 volume% hydrogen flows through the titania sample at a rate of 30 cc/min. In doing so, a hydrogen concentration was monitored continuously by use of a thermal conductivity detector of a gas chromatograph. An amount (µmol/g) of hydrogen consumed during the reduction of titania by hydrogen was measured from the hydrogen concentration. In this regard, amounts of hydrogen consumed were 2012, 2130, 1384, 682, 684, 706, and 1050 µmol/g in the case of Preparation Examples 1, 5, and 7, and Comparative Preparation Examples 1, 3, 4, and 5, respectively. At this time, the titania sample was pre-treated at 250°C for 30 min under a nitrogen atmosphere to remove moisture therefrom prior to heating.

### EXAMPLES 1 TO 10, AND COMPARATIVE EXAMPLES 1 TO 5

0.91 g ammonium metavanadate (NH₄VO₃: 20555-9 manufactured by Aldrich Chemical Co.) was dissolved in 30 mL distilled water. 1.4 g oxalic acid was added to water containing ammonium metavanadate to increase the solubility of ammonium metavanadate in water and control a valence of vanadium. Each of titania supports according to Preparation Examples 1-10, and Comparative Preparation Examples 1-5 was added to the resulting solution in an amount of 20 g to give a slurry. The slurry was heated at 70°C using a vacuum evaporator while it is agitated, and then dried at 100°C for 24 hours. Thereafter, a calcination was performed at 400°C for 6 hours under an air atmosphere to produce a catalyst. The catalyst was analyzed using an elementary analysis device (Optima 3000XL manufactured by Perkin Elmer Co.), and it is confirmed that the catalyst includes 2.0 wt% vanadium based on a weight of titania. Further, a specific surface area (m²/g) of the catalyst was measured by a BET (Brunauer-Emmett-Teller) equation using ASAP 2010C manufactured by Micrometritics Co., the catalyst was analyzed using an XRD (X-ray diffractomer, MX18X HF-SRA manufactured by MAC Science Co.) to obtain a full-width at half maximum (B) of the catalyst, an angle of diffraction (θ) was substituted into a Scherrer's equation to calculate a mean particle size (mm) of the catalyst, and main characteristic peaks of anatase and rutile, that is, 2θ = 25° and 27.5° were substituted into an equation W_{A} = 1/ (1+1.265(I_{R}/I_{A})) (wherein, W_{A} is a ratio of anatase, I_{R} is an area of a characteristic peak of rutile at a plane of (110), and I_{A} is an area of a characteristic peak of anatase at a plane of (101)) to calculate a ratio of anatase and rutile, and the results are described in Table 2.

Meanwhile, various vanadium/TiO₂- based catalysts as prepared above were analyzed according to the following Experimental Examples.

### EXPERIMENTAL EXAMPLE 1 - ANALYSIS OF CONVERSION OF NITROGEN OXIDES ACCORDING TO A TEMPERATURE FOR EACH CATALYST

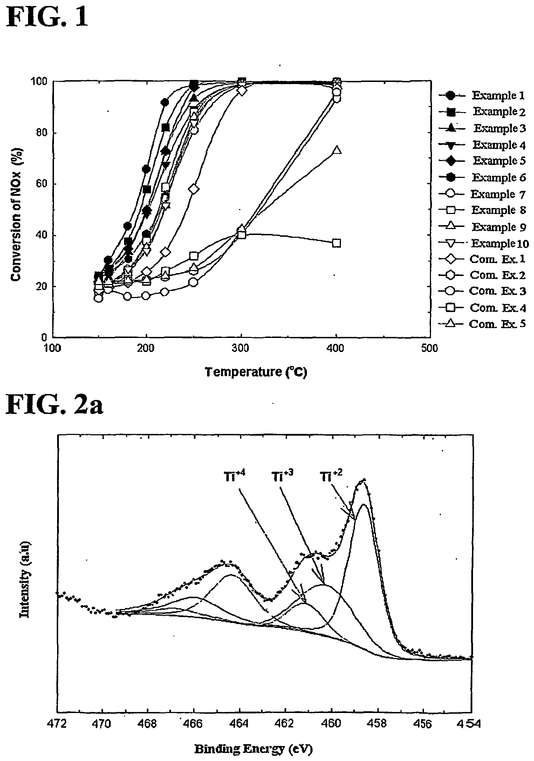

Conversions of nitrogen oxides according to a temperature for the catalysts described in the Table 2 were calculated and illustrated in FIG. 1. In this regard, a temperature of a reactor varies within a range of 150-400°C, a concentration of nitrogen oxides was 800 ppm, and a molar ratio of NH₃/NOₓ was controlled to 1.0. Furthermore, concentrations of oxygen and moisture were respectively 3 and 6 volume%, and a space velocity was 60,000 hr⁻¹. The catalysts were maintained at 400°C for 1 hour under the atmosphere to prevent moisture adsorbed in the catalysts before nitrogen oxides were converted and valences of vanadium and titanium from affecting the SCR, and then cooled to a reaction temperature.

With reference to FIG. 1, in the case of most of the catalysts except for catalysts of Comparative Examples 4 and 5, conversions of nitrogen oxides were high at a relatively high temperature of 400°C. However, only catalysts according to Examples 1-10 have better catalytic activity to convert nitrogen oxides at a relatively low temperature of 250°C or lower.

Particularly, catalytic activity differences between the catalysts are more obviously shown at low temperatures of 150-250 °C. In other words, the catalysts according to Examples 1-10 have the relatively excellent degree of catalytic activities, compared with catalysts according to Comparative Examples 1-5.

The above observations indicates that even though the vanadium/titania-based catalysts having the same vanadium amount may be prepared according to the same manner, the conversion of nitrogen oxides, in essential, varies with physical properties of the catalysts.

### EXPERIMENTAL EXAMPLE 2

### ANALYSIS FOR A SPECIES OF TITANIUM AND VANADIUM OXIDES FORMED ON A SURFACE OF THE CATALYST AND A DISTRIBUTION OF TITANIUM AND VANADIUM OXIDES

An XPS (ESCALAB 201 manufactured by VG Scientific Co.) was used to analyze species of titanium oxides and vanadium oxides formed on a surface of the catalyst, and a distribution of respective titanium oxides and vanadium oxides.

For example, the catalyst according to Example 5 was analyzed using the XPS in terms of Ti 2p and V 2p, and the results are illustrated in FIGS. 2A and 2B. Referring to FIG. 2A, titanium of titania on which vanadium is supported has various valences. That is to say, non-stoichiometric titanium oxides including Ti³⁺ and/or Ti²⁺, which are reduced from TiO₂ exist.

From FIG. 2B, it can be seen that non-stoichiometric vanadium oxides including V⁴⁺ and/or V³⁺ exist on a surface of the catalyst.

The generalized values for the non-stoichiometric vanadium atoms (V⁴⁺ and V³⁺) and the non-stoichiometric titanium atoms (Ti³⁺ and Ti²⁺), respectively, are described in Table 2.

In accordance with the conventional arts, it is known that the vanadium oxides in a vanadium/titania-based catalyst exist in a form of V₂O₅ (i.e., V⁵⁺), and titania exists in a form of stable, stoichiometric TiO₂. On the contrary, it was observed that non-stoichiometric vanadium atoms exist in the catalysts falling within the scope of the present invention as shown in the Table 2 and FIGS. 2A and 2B.

Turning now to FIGS. 3A and 3B, there is illustrated graphs showing conversions of nitrogen oxides as a function of the generalized value which is expressed in a unit of atoms/cm³·wt% for non-stoichiometric vanadium atoms of V⁴⁺ and V³⁺, and non-stoichiometric titanium atoms of Ti³⁺ and Ti²⁺, respectively, in the catalysts according to Examples 1-10 and Comparative Examples 1-3. As shown in FIG. 3A, the conversion of nitrogen oxides is intimately associated with the number of non-stoichiometric vanadium atoms. At this time, the more the number of non-stoichiometric vanadium atoms is, the higher the conversion of nitrogen oxides becomes. Hence, it is confirmed that the catalyst with the high activity at relatively low temperatures should have the high number of non-stoichiometric vanadium atoms. On the other hand, the conversion of nitrogen oxides is little associated with the number of non-stoichiometric vanadium atoms at high temperatures (i.e., 300°C). In view of the above, it is concluded that the number of non-stoichiometric vanadium atoms has a great influence on a denitrification at relatively low temperatures. Along the same line, the number of non-stoichiometric titanium atoms is little related to the conversion of nitrogen oxides at high temperatures (i.e., 300°C), but is intimately associated with the conversion of nitrogen oxides at relatively low temperatures of 200 and 220 °C , as shown in FIG. 3B. The reason therefor is believed that when impregnated onto the titania support and then calcined, the vanadium precursor receives oxygen from the titania while titania is reduced. Therefore, it can be seen that the numbers of non-stoichiometric vanadium and titanium atoms are closely related to each other, and affect the conversion of nitrogen oxides at relatively low temperatures.

To sum up, it is recognized that in order to show the excellent SCR performance at the relative low temperatures, the generalized value for the non-stoichiometric vanadium atoms of V⁴⁺ and V³⁺ should be from 34 atoms/cm³·wt% to 87 atoms/cm³·wt% the generalized value for the non-stoichiometric titanium atoms of Ti³⁺ and Ti²⁺ should be from 415 atoms/cm³·wt% to 1112 atoms/cm³·wt%.

**TABLE 2**

| Catalyst (V/TiO₂) | ¹Area (m²/g ) | Particle size (nm) | Anatase:rutile | Ti³⁺ and Ti²⁺ (atoms/cm³ ·wt%) | V⁴⁺ and V³⁺ (atoms/cm³ ·wt%) |
|---|---|---|---|---|---|
| Example 1 | 72.9 | 23 . | 100:0 | 1112 | 76 |
| Example 2 | 54.1 | 59 | 93.6:6.4 | 840 | 87 |
| Example 3 | 54.1 | 34 | 100:0 | 875 | 46 |
| Example 4 | 51.1 | 33 | 74.2:25.8 | 746 | 67 |
| Example 5 | 93.6 | 22 | 100:0 | 768 | 42 |
| Example 6 | 63.2 | 27 | 100:0 | 638 | 38 |
| Example 7 | 91.9 | 24 | 100:0 | 648 | 44 |
| Example 8 | 83.4 | 29 | 100:0 | 582 | 34 |
| Example 9 | 95.4 | 16 | 100:0 | 415 | 36 |
| Example 10 | 97.4 | 21 | 100:0 | 485 | 40 |
| Com. Ex. 1 | 65.9 | 15 | 0:100 | 241 | 33 |
| Com. Ex. 2 | 192.9 | 15 | 100:0 | 0 | 15 |
| Com. Ex. 3 | 134.3 | 15 | 100:0 | 0 | 33 |
| Com. Ex. 4 | 13 | 54 | 98:2 | 677 | 114 |
| Com. Ex. 5 | 4.4 | 55 | 4:96 | 0 | 168 |

| | | | | | |
|---|---|---|---|---|---|
| ¹Area: Specific surface area | | | | | |

In view of the results according to Preparation Examples and the Experimental Examples, it can be seen that as the amount of hydrogen consumed for the reduction increases, the SCR activity of the catalyst grows higher. Accordingly, it is preferred that the catalyst has a hydrogen reduction ability of about 1384 µmol/g or more to desirably conduct the SCR reaction.

The support of the catalyst with the low activity has a low hydrogen reduction. This means that the reduction ability of the titania support affects the activity of the catalyst, and affects a procedure in which vanadium is supported on the titania to contribute to forming non-stoichiometric titanium and vanadium.

For example, in the case of the catalyst according to Comparative Examples 1-3, the reduction of the titania support is not desirably accomplished, thus it is difficult to form V⁴⁺ and V³⁺. In addition, because the O/Ti ratio is within the range between 1.3 and 1.4, it can be seen that the amount of lattice oxygen is insufficient. As for the catalyst according to Comparative Examples 4 and 5, the catalyst has the low activity even though the O/Ti ratio is about 2.15, that is, a ratio of oxygen is high. The reason therefor is that titania is not combined with vanadium at the interface therebetween due to a low reduction ability of the titania, and instead combined with gaseous oxygen to form vanadium oxide while vanadium is impregnated onto titania and calcined. The vanadium oxide thus formed is different from that formed by the reduction of the titania and bonded to titania through the oxygen bridge. Thus, the non-stoichiometric vanadium oxides such as V₂O₃ and V₂O₄ may be formed on the titania support, which is out of the scope of the present invention, however, such non-stoichiometric vanadium oxides correspond to the simple combination of the vanadium oxide precursor (e.g., ammonium metavanadate) with gaseous oxygen supplied during the calcination.

In the light of the above, a predetermined amount or more of non-stoichiometric vanadium oxide should exist in the catalyst and simultaneously a molar ratio of O/Ti in titania should be in the range of about 1.47-2.0 to secure desirable removal efficiency of nitrogen oxide in the SCR reaction.

### EXPERIMENTAL EXAMPLE 3

To explain using the change of a Fermi level the fact that a catalyst containing non-stoichiometric vanadium and titanium has high activity in the present invention, a computer simulation, was conducted to confirm the change of a semiconductor energy level of titania oxide in the catalyst. At this time, titania had a completely oxidized anatase-typed crystal structure and existed in a form of TiO₂. In order to understand the influence of titania on the reduction, oxygen was removed from titania to accomplish the reduction of titania. Because a non-stoichiometric ratio of titania is TiOy, completely oxidized TiO₂ is realized by monitoring an electrochemical phenomenon of Ti₄O₈ which is the same as TiO₂ in terms of stoichiometry, and an electrochemical change of Ti₄O₇ which is obtained by removing one oxygen atom from Ti₄O₈ is monitored to realize reduced titania. Even though the actual reduced titania on which vanadium is supported is different from a sample simulated by a computer, the computer simulation conducted in this Experimental Example is useful in confirming a trend of electrochemical properties of reduced titania.

FIG. 4A is a graph showing a density of state (DOS) as a function of an energy level for stoichiometric anatase-typed titania (titania is expressed by Ti₄O₈ instead of TiO₂ to simulate it by the computer in Experimental Example 3). At this time, the DOS and energy level are obtained from the computer simulation. In FIG. 4A, the term 'EF' positioned on an X-axis denotes a Fermi level. The EF is positioned at the center of the X-axis, signals are positioned at both sides of the EF, and a valley is formed between a left and a right signal. The left signal is a signal for VB, and the right signal is a signal for CB. An energy located at a right end of the VB signal corresponds to an edge of the VB, and an energy located at a left end of the CB signal corresponds to an edge of the CB. In this regard, a space between the edges of the VB and CB corresponds to a band-gap energy. The Fermi level of titania is positioned between the edges of the VB and CB, and particularly, positioned near the VB signal.

FIG. 4B illustrates a result of the computer simulation of a Ti₄O₇ compound which is reduced by removing one oxygen atom from Ti₄O₈. This intends to simulate by the computer how lattice oxygen of titania is covalent-bonded to vanadium when a vanadium compound is formed on a titania support. In FIG. 4B, the Fermi level has a higher level than the CB, and the DOS is rapidly increased at the Fermi level. Hence, electrons are readily transferred with the same degree as metals between the Fermi level and CB. This means that reduced titanium oxide Ti₄O₇ has a lower energy level than completely oxidized Ti₄O₈, thus electrons at the Fermi level are transferred to the CB. In the SCR reaction, the reduced non-stoichiometric titania can act as a support having higher activity than completely oxidized stoichiometric titania at relatively low temperatures. Non-stoichiometric titania on which vanadium is supported causes the change of the band-gap energy and Fermi level, thereby readily transferring electrons.

### EXPERIMENTAL EXAMPLE 4.

In this Experimental Example, H₂-TPR test was carried out for each of the catalysts according to Examples 1, 4, 5, and 7, and Comparative Examples 1, 3, 4, and 5.

According to the H₂-TPR test, 50 mg catalyst was heated from room temperature to 900°C while 5 volume% hydrogen flowed through the catalyst at a rate of 30 cc/min to continuously monitor a hydrogen concentration using a mass spectroscope. The catalyst was oxidized at 400°C for 30 min while air flowed through the catalyst to remove moisture therefrom and to be activated and then pre-treated at 300°C for 90 min under a nitrogen atmosphere to remove oxygen therefrom, prior to conduct the H₂-TPR test.

A starting temperature of the hydrogen reduction and a maximum hydrogen reduction temperature as an indirect evaluation factor used to evaluate the reduction ability of the catalyst were measured, and the results are described in Table 3. From the Table 3, it can be seen that maximum hydrogen reduction temperatures of most of the catalysts are about 500°C and similar to each other. However, the catalyst with lower activity has the higher starting temperature of the hydrogen reduction. In other words, the catalyst with relatively high activity has excellent reduction ability at relatively low temperatures, and easily provides lattice oxygen at relatively low temperatures upon the reduction of nitrogen oxides. Accordingly, when the starting temperature of the hydrogen reduction and maximum hydrogen reduction temperature of the catalyst are 408°C or lower and 506°C or lower, respectively, it has relatively high activity at relatively low temperatures.

**TABLE 3**

| Catalyst | ¹Starting temperature (°C) | ²Maximum temperature (°C) |
|---|---|---|
| Example 1 | 358 | 490 |
| Example 4 | 408 | 505 |
| Example 5 | 404 | 500 |
| Example 7 | 386 | 506 |
| Comparative Example 1 | 363 | 502 |
| Comparative Example 3 | 402 | 494 |
| Comparative Example 4 | 414 | 521 |
| Comparative Example 5 | 433 | 536 |

| | | |
|---|---|---|
| ¹Starting temperature: Starting temperature of the hydrogen reduction ²Maximum temperature: Maximum hydrogen reduction temperature | | |

### EXPERIMENTAL EXAMPLE 5

In this Experimental Example, an O₂-TPO test was carried out for each of the catalysts according to Examples 1, 2, 5, 7 and 10, and Comparative Examples 1, 3,4 and 5 to find temperatures needed to re-oxidize themselves.

According to the O₂-TPO test, the catalyst was heated at a heating rate of 10°C/min to 400°C while 0:5 volume% ammonia was fed into a reactor in which 0.3 g catalyst was charged at a rate of 50 cc/min, and left at 400°C for 30 min to be reduced. The reduced catalyst was then cooled to room temperature, heated at a heating rate of 10°C/min to 600°C while 1 volume% oxygen was fed into the reactor in which the catalyst was charged to monitor a consumed oxygen concentration using a mass spectroscope. The results are described in Table 4. From the Table 4, it can be seen that the catalyst with higher activity has the lower maximum oxygen consumption temperature. Accordingly, when the maximum oxygen consumption temperature of the catalyst is about 405°C or lower, it has relatively high activity at relatively low temperatures.

**TABLE 4**

| Catalyst | Maximum oxygen consumption temperature (°C) |
|---|---|
| Example 1 | 355 |
| Example 2 | 343 |
| Example 5 | 377 |
| Example 7 | 362 |
| Example 10 | 405 |
| Comparative Example 1 | 406 |
| Comparative Example 3 | 439 |
| Comparative Example 4 | 417 |
| Comparative Example 5 | 476 |

### EXPERIMENTAL EXAMPLE 6

In this Experimental Example, an oxygen-reoxidation test was carried out for each of the catalysts according to Examples 1, 4, 5, 7, 9 and 10, and Comparative Examples 1, 3, 4 and 5 to measure the extent of the reoxidation thereof.

According to the oxygen-reoxidation test, the catalysts were heated at a heating rate of 10°C/min to 400°C while 5000 ppm ammonia flowed through the catalysts and left at 400°C for 30 min to be reduced, and a SCR reaction was conducted at 180°C while 800 ppm nitrogen oxides and ammonia flow through the vanadium/titania-based catalyst in a NH₃/NOₓ molar ratio of 1 without oxygen, and after a predetermined time, 200 ppm oxygen additionally flows through the vanadium/titania-based catalyst in conjunction with the nitrogen oxides and ammonia to monitor a concentration of nitrogen monoxide discharged.

At this time, only nitrogen monoxide was discharged from the SCR reaction because nitrogen dioxide was not detected. A conversion of nitrogen oxide was calculated based thereon, and the results are illustrated in FIG. 7. In FIG. 7, oxygen starts to be supplied to the catalyst at 0 min.

Referring to FIG. 7, in the case of using the catalysts according to Examples 1, 4, 5, 7, 9 and 10, a conversion of nitrogen monoxide is rapidly increased after oxygen is supplied to the catalysts. On the other hand, in the case of using the catalysts according to Comparative Examples 1, 3, 4 and 5, the conversion of nitrogen monoxide is slightly increased. In particular, even though the catalyst of Comparative Example 1 has higher activity than the catalysts of Comparative Examples 3 to 5, the catalysts according to Comparative Examples 1, 3 to 5 are similar to each other in terms of a change of the conversion of nitrogen monoxide. The reason therefor is that a concentration of oxygen supplied to the catalyst is very low. From the above observation, it can be understood that the catalyst from which lattice oxygen is removed during the reduction recovers activity by the reoxidation. In particular, the catalyst with higher activity is more actively reoxidized.

Therefore, in consideration of the H₂-TPR test of Experimental Example 4 as well as the oxygen-reoxidation, the catalyst which is easily reduced and reoxidized effectively removes nitrogen oxide at relatively low temperatures in the SCR reaction.

From FIG. 7, it can be seen that the catalyst containing titania with high reduction ability as a support is advantageous in reoxidizing the catalyst by gaseous oxygen. Furthermore, under the same conditions as Experimental Example 6, the catalyst which increases the conversion of nitrogen monoxide by a maximum of 9 % or more and by 8 % or more after 60 min has high activity at relatively low temperatures.

### EXPERIMENTAL EXAMPLE 7

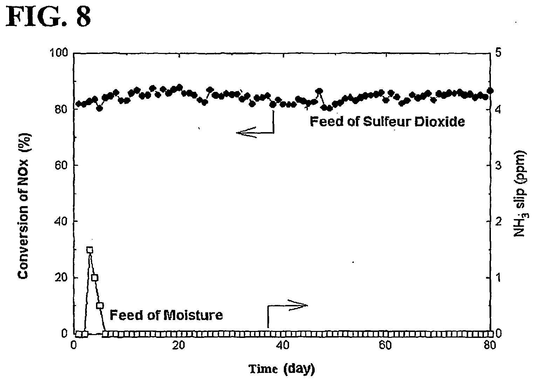

The catalyst according to Example 1 was tested at 200 °C using a mixture gas of 8 volume% moisture and 150 ppm sulfur dioxide to calculate a conversion of nitrogen oxide and an discharged amount of unreacted ammonia according to a reaction time, and the results are illustrated in FIG. 8. At this time, a concentration of nitrogen oxide was 150 ppm and a NH₃/NOₓ molar ratio was 0.9. Further, a concentration of oxygen was 15 volume%, and a space velocity was 60,000 hr⁻¹. The catalyst was left at 400°C for one hour under the atmosphere to prevent moisture adsorbed in the catalysts before nitrogen oxide was converted and valences of vanadium and titanium from affecting the SCR reaction, and then cooled to a reaction temperature.

In this regard, the catalyst was not deactivated by moisture as shown in FIG. 8. Further, initially, a small amount of unreacted ammonia was discharged, but after a predetermined time, the discharge of unreacted ammonia was not detected. Accordingly, because ammonia selectively reacted with nitrogen oxide even though sulfur dioxide was contained in a discharged gas, ammonium bisulfate causing the deactivation of the catalyst was not formed, and ammonium sulfate produced by reacting sulfur trioxide, moisture and ammonia and acting as a poison of the catalyst was not generated, thereby activity of the catalyst was not reduced.

### Industrial Applicability

As apparent from the above description, the present invention provides a vanadium/titania-based catalyst having high activity at relatively low temperatures, in which V⁴⁺ and/or V³⁺ as well as V⁵⁺ are formed and Ti³⁺ and/or Ti²⁺ as well as Ti⁴⁺ are formed. At this time, the presence of non-stoichiometric vanadium atoms contributes to allowing the catalyst to receive electrons and to allowing the electrons to be actively transferred to promote the reduction by lattice oxygen and the oxidation by gaseous oxygen. That is to say, the catalyst readily receives gaseous oxygen to produce activated lattice oxygen, and thus the activated lattice oxygen participates in the reduction of the catalyst to decompose nitrogen oxide. At this time, the reduced catalyst receives gaseous oxygen to be re-oxidized. Hence, the catalyst according to the present invention has excellent oxidation and/or reduction ability and high activity in the SCR of removing nitrogen oxide.

Further, the present invention is advantageous in that the removing efficiency of nitrogen oxide is improved because nitrogen oxide is removed at relatively low temperatures, the formation of salts such as ammonium bisulfate and/or ammonium nitrate is suppressed because an amount of unreacted ammonia is reduced, and a life span of the catalyst is increased and the corrosion of devices is reduced because the salts are decomposed at relatively low temperatures.

The present invention has been described in an illustrative manner, and it is to be understood that the terminology used is intended to be in the nature of description rather than of limitation. Many modifications and variations of the present invention are possible in light of the above teachings. Therefore, it is to be understood that within the scope of the appended claims, the invention may be practiced otherwise than as specifically described.

## Claims

1. A vanadium/titania-based catalyst for selectively removing nitrogen oxides from a flue gas through a selective catalytic reduction technique, the vanadium being in a form of oxide and supported on the titania, wherein the amount of vanadium supported on titania is 1-5 wt% based on the weight of the catalyst, wherein a generalized value for V⁴⁺ and V³⁺ is 34 atoms/cm³ wt% to 87 atoms/cm³ wt%, and a generalized value for Ti³⁺ and Ti²⁺ is 415 atoms/cm³ wt% to 1112 atoms/cm³ wt%, the generalized value being defined as a number of non-stoichiometric atoms per unit volume (cm³) of the catalyst divided by wt% of the supported vanadium, wherein the number of non-stoichiometric vanadium atoms or titanium atoms per unit volume (cm³) of catalyst is calculated based on an area (the number of photoelectrons obtained per unit hour) from the XPS analysis in consideration of an atomic sensitivity factor.

2. The vanadium/titania-based catalyst as set forth in claim 1, wherein the titania has a molar ratio of oxygen to titanium (O/Ti) of 1.47-2. 0.

3. The vanadium/titania-based catalyst as set forth in claim 1, wherein the titania as a support is **characterized in that** an amount of hydrogen consumed per unit weight of the titania as measured by a H2-TPR test is in the range of 1384 µ mol/g or more, said H2-TPR test being conducted under such a condition that 50 mg of the titania is heated at a heating rate of 10 °C/min from room temperature to 900 °C while 5 volume% hydrogen flows through the titania at a rate of 30 cc/min.

4. The vanadium/titania-based catalyst as set forth in claim 1, wherein the catalyst is **characterized in that** a hydrogen reduction by a H2-TPR test starts at 408°C or lower and is maximally accomplished at 506 °C or lower, said H2-TPR test being conducted under such a condition that the catalyst is heated from room temperature to 900 °C while 5 volume% hydrogen flows through the catalyst at a rate of 30 cc/min.

5. The vanadium/titania-based catalyst as set forth in claim 1, wherein the catalyst is **characterized in that** a maximum oxygen-consumed temperature by an 02-TPO test is 405 °C or lower, said 02-TPO test being conducted under such a condition that the catalyst is heated at a heating rate of 10°C/min from room temperature to 400 °C while 0.5 volume% ammonia flows through the catalyst at a rate of 50 cc/min, left at 400 °C for 30 min to be reduced, cooled to the room temperature, and then heated at a heating rate of 10°C/min to 600 °C while 1 volume% oxygen flows through the catalyst.

6. The vanadium/titania-based catalyst as set forth in claim 1, wherein the catalyst is **characterized in that** a conversion of nitrogen monoxide is increased by a maximum of 9 % or more and by 8 % or more after 60 min by a re-oxidation test of the catalyst, said re-oxidation test being conducted under such a condition that the catalyst is heated at a heating rate of 10°C/min to 400 °C while 5000 ppm ammonia flows through the catalyst and left at 400 °C for 30 min to be reduced, and a selective catalytic reduction is carried out at 180°C while 800 ppm nitrogen oxides (NOX) and ammonia flow through the catalyst in a NH3/NOx molar ratio of 1 without oxygen, and after a predetermined time, 200 ppm oxygen additionally flows through the catalyst in conjunction with the nitrogen oxides and ammonia.

7. The vanadium/titania-based catalyst as set forth in claim 1, wherein the vanadium is derived from a vanadium precursor of ammonium metavanadate or vanadium chloride.

8. The vanadium/titania-based catalyst as set forth in claim 1, wherein the catalyst is extruded into a particle-type or monolith-type structure.

9. A catalytic body for selectively removing nitrogen oxides from a flue gas through a selective catalytic reduction technique, wherein the vanadium/titania- based catalyst as set forth in claim 1 is coated on a structure selected from the group consisting of a metal plate, a metal fiber, a ceramic filter, and a honeycomb.

10. An air pre-heater comprising the vanadium/titania-based catalyst as set forth in claim 1, in which the catalyst is coated on a tube, a duct and/or wall thereof.

11. A boiler comprising the vanadium/titania-based catalyst as set forth in claim 1, in which the catalyst is coated on a tube, a duct and/or wall thereof.

12. A process of selectively reducing and removing nitrogen oxides in a flue gas, which comprises carrying out a selective catalytic reduction by use of ammonia as a reducing agent at a temperature of 150 to 450 °C and a gas hourly space velocity (GHSV) of 1,000 to 60,000 hr∼1 in the presence of the catalyst as set forth in claim 1.

13. The process as set forth in claim 12, wherein said ammonia is fed at a molar ratio of 0. 6-1. 2 to said nitrogen oxides of the flue gas.

14. The process as set forth in claim 12, wherein the flue gas contains 500 ppm or less of sulfur dioxide.

## Patentansprüche

1. Katalysator auf Vanadium/Titandioxid-Basis zur selektiven Entfernung von Stickstoffoxiden aus einem Rauchgas durch eine Technik der selektiven katalytischen Reduktion, wobei das Vanadium in Oxidform und auf dem Titandioxid geträgert vorliegt, wobei die Menge des auf Titandioxid geträgerten Vanadiums 1-5 Gew.-%, bezogen auf das Gewicht des Katalysators, beträgt, wobei ein generalisierter Wert für V⁴⁺ und V³⁺ 34 Atome/cm³ Gew.-% bis 87 Atome/cm³ Gew.-% beträgt und ein generalisierter Wert für Ti³⁺ und Ti²⁺ 415 Atome/cm³ Gew.-% bis 1112 Atome/cm³ Gew.-% beträgt, wobei der generalisierte Wert als eine Zahl nichtstöchiometrischer Atome pro Volumeneinheit (cm³) des Katalysators/Gew.-% des geträgerten Vanadiums definiert ist, wobei die Zahl nichtstöchiometrischer Vanadiumatome bzw. Titan-atome pro Volumeneinheit (cm³) Katalysator auf der Basis einer Fläche (der Zahl der pro Stundeneinheit erhaltenen Photoelektronen) aus der XPS-Analyse unter Berücksichtigung eines Atom-Sensitivitätsfaktors berechnet wird.

2. Katalysator auf Vanadium/Titandioxid-Basis nach Anspruch 1, wobei das Titandioxid ein Molverhältnis von Sauerstoff zu Titan (O/Ti) von 1,47-2,0 aufweist.

3. Katalysator auf Vanadium/Titandioxid-Basis nach Anspruch 1, wobei das Titandioxid als Träger **dadurch gekennzeichnet ist, dass** eine pro Gewichtseinheit des Titandioxids verbrauchte Wasserstoffmenge gemäß Messung durch einen H2-TPR-Test im Bereich von 1384 µ mol/g oder mehr liegt, wobei der H2-TPR-Test unter einer solchen Bedingung durchgeführt wird, dass 50 mg des Titandioxids mit einer Heizrate von 10°C/min von Raumtemperatur auf 900°C erhitzt werden, während 5 Vol.-% Wasserstoff mit einer Rate von 30 cm³/min durch das Titandioxid strömen.

4. Katalysator auf Vanadium/Titandioxid-Basis nach Anspruch 1, wobei der Katalysator **dadurch gekennzeichnet ist, dass** eine Wasserstoffreduktion durch einen H2-TPR-Test bei 408°C oder weniger beginnt und bei 506°C oder weniger maximal erreicht ist, wobei der H2-TPR-Test unter einer solchen Bedingung durchgeführt wird, dass der Katalysator von Raumtemperatur auf 900°C erhitzt wird, während 5 Vol.-% Wasserstoff mit einer Rate von 30 cm³/min durch den Katalysator strömen.

5. Katalysator auf Vanadium/Titandioxid-Basis nach Anspruch 1, wobei der Katalysator **dadurch gekennzeichnet ist, dass** eine maximale Sauerstoffverbrauchstemperatur durch einen O2-TPO-Test 405°C oder weniger beträgt, wobei der O2-TPO-Test unter einer solchen Bedingung durchgeführt wird, dass der Katalysator mit einer Heizrate von 10°C/min von Raumtemperatur auf 400°C erhitzt wird, während 0,5 Vol.-% Ammoniak mit einer Rate von 50 cm³/min durch den Katalysator strömen, 30 min bei 400°C reduzieren gelassen wird, auf Raumtemperatur abgekühlt wird und dann mit einer Heizrate von 10°C/min auf 600°C erhitzt wird, während 1 Vol.-% Sauerstoff durch den Katalysator strömt.

6. Katalysator auf Vanadium/Titandioxid-Basis nach Anspruch 1, wobei der Katalysator **dadurch gekennzeichnet ist, dass** eine Umwandlung von Stickstoffmonoxid um maximal 9% oder mehr und um 8% oder mehr nach 60 min durch einen Reoxidationstest des Katalysators erhöht ist, wobei der Reoxidationstest unter einer solchen Bedingung durchgeführt wird, dass der Katalysator mit einer Heizrate von 10°C/min auf 400°C erhitzt wird, während 5000 ppm Ammoniak durch den Katalysator strömen, und 30 min bei 400°C reduzieren gelassen wird und eine selektive katalytische Reduktion bei 180°C durchgeführt wird, während 800 ppm Stickstoffoxide (NOX) und Ammoniak in einem NH3/NOx-Molverhältnis von 1 ohne Sauerstoff durch den Katalysator strömen und nach einer vorbestimmten Zeit zusätzlich 200 ppm Sauerstoff gemeinsam mit den Stickstoffoxiden und dem Ammoniak durch den Katalysator strömen.

7. Katalysator auf Vanadium/Titandioxid-Basis nach Anspruch 1, wobei sich das Vanadium von einer Vanadium-Vorstufe von Ammoniummetavanadat oder Vanadiumchlorid ableitet.

8. Katalysator auf Vanadium/Titandioxid-Basis nach Anspruch 1, wobei der Katalysator zu einer Struktur vom Teilchen-Typ oder Monolith-Typ extrudiert ist.

9. Katalysatorkörper zur selektiven Entfernung von Stickstoffoxiden aus einem Rauchgas durch eine Technik der selektiven katalytischen Reduktion, wobei der Katalysator auf Vanadium/Titandioxid-Basis nach Anspruch 1 auf eine Struktur aus der Gruppe bestehend aus einer Metallplatte, einer Metallfaser, einem Keramikfilter und einer Wabe aufgetragen ist.

10. Luftvorwärmer, umfassend den Katalysator auf Vanadium/Titandioxid-Basis nach Anspruch 1, wobei der Katalysator auf ein Rohr, eine Rohrleitung und/oder eine Wand davon aufgetragen ist.

11. Kessel, umfassend den Katalysator auf Vanadium/Titandioxid-Basis nach Anspruch 1, wobei der Katalysator auf ein Rohr, eine Rohrleitung und/oder eine Wand davon aufgetragen ist.

12. Verfahren zur selektiven Reduktion und Entfernung von Stickstoffoxiden in einem Rauchgas, bei dem man eine selektive katalytische Reduktion durch Verwendung von Ammoniak als Reduktionsmittel bei einer Temperatur von 150 bis 450°C und einer Raumgeschwindigkeit (GHSV) von 1000 bis 60000 h⁻¹ in Gegenwart des Katalysators gemäß Anspruch 1 durchführt.

13. Verfahren nach Anspruch 12, bei dem man das Ammoniak in einem Molverhältnis von 0,6-1,2 zu den Stickstoffoxiden des Rauchgases zuführt.

14. Verfahren nach Anspruch 12, bei dem das Rauchgas 500 ppm oder weniger Schwefeldioxid enthält.

## Revendications

1. Catalyseur à base de vanadium/dioxyde de titane destiné à une utilisation pour l'élimination sélective d'oxydes d'azote à partir d'un gaz de combustion par une technique de réduction catalytique sélective, le vanadium étant sous la forme d'un oxyde présent sur le dioxyde de titane utilisé comme support, la quantité de vanadium présente sur le dioxyde de titane utilisé comme support étant de 1 à 5 %pds relativement au poids du catalyseur, une valeur généralisée pour V⁴⁺ et V³⁺ étant de 34 atomes/cm³ %pds à 87 atomes/cm³ %pds, et une valeur généralisée pour Ti³⁺ et Ti²⁺ étant de 415 atomes/cm³ %pds à 1 112 atomes/cm³ %pds, la valeur généralisée étant définie comme un nombre d'atomes non stoechiométriques par unité de volume (cm³) du catalyseur divisé par le pourcentage en poids du vanadium présent sur le support, le nombre d'atomes de vanadium ou d'atomes de titane non stoechiométriques par unité de volume (cm³) de catalyseur étant calculé à partir d'une aire (le nombre de photoélectrons obtenus par unité-heure) obtenue lors de l'analyse XPS (spectroscopie photoélectronique des rayons X) en prenant en compte un facteur de sensibilité atomique.

2. Catalyseur à base de vanadium/dioxyde de titane selon la revendication 1, dans lequel le dioxyde de titane a un rapport molaire de l'oxygène contre le titane (O/Ti) de 1,47 à 2,0.

3. Catalyseur à base de vanadium/dioxyde de titane selon la revendication 1, dans lequel le dioxyde de titane utilisé comme support est **caractérisé en ce qu'**une quantité d'hydrogène consommée par unité de poids du dioxyde de titane, telle que mesurée par un essai de réduction en température programmée sous dihydrogène (H2-RTP) est de l'ordre de 1 384 u mol/g ou plus, ledit essai H2-RTP étant conduit sous une condition telle que 50 mg du dioxyde de titane soient chauffés à une vitesse de chauffage de 10 °C/minute de la température ambiante à 900 °C tandis que 5 %vol d'hydrogène s'écoule à travers le dioxyde de titane à un débit de 30 cc/minute.

4. Catalyseur à base de vanadium/dioxyde de titane selon la revendication 1, le catalyseur étant **caractérisé en ce qu'**une réduction par l'hydrogène lors d'un essai H2-RTP commence à 408 °C ou moins et se déroule à un niveau maximum à 506 °C ou moins, ledit essai H2-RTP étant conduit sous une condition telle que le catalyseur soit chauffé de la température ambiante à 900 °C tandis que 5 %vol d'hydrogène s'écoule à travers le catalyseur à un débit de 30 cc/minute.

5. Catalyseur à base de vanadium/dioxyde de titane selon la revendication 1, le catalyseur étant **caractérisé en ce qu'**une température de consommation maximum d'oxygène lors d'un essai d'oxydation en température programmée sous oxygène (O2-OTP) est de 405 °C ou moins, ledit essai O2-OTP étant conduit sous une condition telle que le catalyseur soit chauffé à une vitesse de chauffage de 10 °C/minute de la température ambiante à 400 °C tandis que 0,5 %vol d'ammoniaque s'écoule à travers le catalyseur à un débit de 50 cc/minute, soit laissé à 400 °C pendant 30 minutes pour subir une réduction, refroidi à la température ambiante, puis chauffé à une vitesse de chauffage de 10 °C/minute jusqu'à 600 °C tandis que 1 %vol d'oxygène s'écoule à travers le catalyseur.

6. Catalyseur à base de vanadium/dioxyde de titane selon la revendication 1, le catalyseur étant **caractérisé en ce qu'**une conversion du monoxyde d'azote est augmentée d'un maximum de 9 % ou plus et de 8 % ou plus après 60 minutes lors d'un essai de réoxydation du catalyseur, ledit essai de réoxydation étant conduit sous une condition telle que le catalyseur soit chauffé à une vitesse de chauffage de 10 °C/minute jusqu'à 400 °C tandis que 5 000 ppm d'ammoniaque s'écoulent à travers le catalyseur et soit laissé à 400 °C pendant 30 minutes pour subir une réduction, et qu'une réduction catalytique sélective soit réalisée à 180 °C tandis que 800 ppm d'oxydes d'azote (NOx) et d'ammoniaque s'écoulent à travers le catalyseur selon un rapport molaire NH₃/NOx de 1 sans oxygène, et qu'après un temps prédéterminé, 200 ppm d'oxygène s'écoulent additionnellement à travers le catalyseur en même temps que les oxydes d'azote et l'ammoniaque.

7. Catalyseur à base de vanadium/dioxyde de titane selon la revendication 1, dans lequel le vanadium est dérivé d'un précurseur de vanadium sous forme de métavanadate d'ammonium ou de chlorure de vanadium.

8. Catalyseur à base de vanadium/dioxyde de titane selon la revendication 1, dans lequel le catalyseur est extrudé pour produire une structure de type particule ou de type monolithe.

9. Corps catalytique destiné à une utilisation pour l'élimination sélective d'oxydes d'azote à partir d'un gaz de combustion par une technique de réduction catalytique sélective, le catalyseur à base de vanadium/dioxyde de titane selon la revendication 1 étant appliqué de façon à former un revêtement sur une structure sélectionnée dans le groupe constitué d'une plaque métallique, d'une fibre métallique, d'un filtre en céramique, et d'un nid d'abeilles.

10. Préchauffeur d'air comprenant le catalyseur à base de vanadium/dioxyde de titane selon la revendication 1, dans lequel le catalyseur est appliqué de façon à former un revêtement sur un tube, un conduit et/ou une paroi dudit préchauffeur d'air.

11. Chaudière comprenant le catalyseur à base de vanadium/dioxyde de titane selon la revendication 1, dans laquelle le catalyseur est appliqué de façon à former un revêtement sur un tube, un conduit et/ou une paroi de ladite chaudière.

12. Procédé de réduction sélective et d'élimination d'oxydes d'azote dans un gaz de combustion, lequel comprend la réalisation d'une réduction catalytique sélective en utilisant de l'ammoniaque comme agent réducteur à une température de 150 à 450 °C et à une vitesse volumique horaire (GHSV, Gas Hourly Space Velocity) pour le gaz de 1 000 à 60 000 h⁻¹ en présence du catalyseur selon la revendication 1.

13. Procédé selon la revendication 12, dans lequel ledit ammoniaque est introduit selon un rapport molaire de 0,6 à 1,2 contre lesdits oxydes d'azote du gaz de combustion.

14. Procédé selon la revendication 12, dans lequel le gaz de combustion contient 500 ppm ou moins de dioxyde de soufre.
